(19) Europäisches Patentamt
European Patent Office
Office européen des brevets

(11) EP 1 167 445 A2

(12) EUROPÄISCHE PATENTANMELDUNG

(43) Veröffentlichungstag:
**02.01.2002 Patentblatt 2002/01**

(51) Int Cl.[7]: **C08L 33/06**, C08J 9/10

(21) Anmeldenummer: **01114186.8**

(22) Anmeldetag: **12.06.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **23.06.2000 DE 10029735**

(71) Anmelder: **Röhm GmbH & Co. KG**
**64293 Darmstadt (DE)**

(72) Erfinder:
- **Löhden, Gerd, Dr.**
  **63457 Hanau (DE)**
- **Belzner, Winfried**
  **63584 Gründau (DE)**
- **Geyer, Hans-Jürgen**
  **64367 Mühltal (DE)**
- **Rausch, Ursula**
  **64347 Griesheim (DE)**
- **Träbing, Mauren**
  **63477 Maintal (DE)**

# (54) Schäumbare Poly(meth)acrylatplastisole und Verfahren zu ihrer Herstellung

(57) Offenbart wird ein schäumbares Plastisol für einen Schaum mit verbessertem Rückstellvermögen, enthaltend

I. 12,5 bis 99,2 Gew.-% bezogen auf das Gesamtgewicht des schäumbaren Plastisols eines oder mehrerer Polymerisate und/oder Copolymerisate von (Meth)acrylaten erhältlich durch Polymerisation in der Beschreibung angegebenen Zusammensetzungen;

II. 0,5 bis 80 Gew.-% mit den Polymerisaten und/oder Copolymerisaten aus I. verträgliche Weichmacher bezogen auf das Gesamtgewicht des schäumbaren Plastisols;

III. 0 bis 87,5 Gew.-% anorganische Füllstoffe bezogen auf das Gesamtgewicht des schäumbaren Plastisols;

IV. 0,1 bis 10 Gew.-% eines oder mehrerer Treibmittel bezogen auf das Gesamtgewicht des schäumbaren Plastisols;

V. 0,1 bis 5 Gew.-% eines oder mehrerer Kicker bezogen auf das Gesamtgewicht des schäumbaren Plastisols und

VI. 0,1 bis 3 Gew.-% eines oder mehrerer Zusatzstoffe in Mengen bezogen auf das Gesamtgewicht des schäumbaren Plastisols,

wobei I. bis VI. 100 Gew.-% des schäumbaren Plastisols ergeben,
sich dadurch auszeichnet, daß wenigstens ein Teil der Polymerisate und/oder Copolymerisate aus I. eine Kern-Schale-Struktur bestehend aus einem Kern und mindestens einer Schale aufweist, wobei

(i) der Kern Polymerketten mit einem Gewichtsmittel des Molekulargewichts $\overline{M_w}$ zwischen 10.000 g/mol und 1.000.000 g/mol aufweist, und

(ii) eine Schale aus Polymerketten mit einem Gewichtsmittel des Molekulargewichts $\overline{M_W}$ größer 1.000.000 g/mol besteht.

Neben Verbesserungen hinsichtlich der mechanischen Eigenschaften der resultierenden Schichten, insbesondere einem verbessertem Rückstellvermögen, zeigen die schäumbaren Plastisole selbst eine verbesserte Lagerstabilität, hervorragende Verträglichkeit mit preiswerten Weichmachern und erlauben einen relativ hohen Bindemittelgehalt.

EP 1 167 445 A2

## Beschreibung

Die Erfindung betrifft schäumbare Poly(meth)acrylatplastisole, ein Verfahren zu ihrer Herstellung, ihre Verwendung sowie geformte Gegenstände, welche die geschäumten Poly(meth)acrylatplastisole aufweisen. Insbesondere bezieht sich die Erfindung auf schäumbare Poly(meth)acrylatplastisole, die zur Herstellung von Plastisolschäumen mit sehr gutem Rückstellvermögen verwendet werden können.

Bei Plastisolen handelt es sich um kolloidale Suspensionen einer Polymerkomponente (Bindemittel) in Weichmacher. Plastisole stellen mithin in der Regel zweiphasige Systeme dar, deren eine Komponente ein Polymer und die zweite ein geeigneter Weichmacher ist. Plastisole werden üblicherweise bei Umgebungstemperatur durch Streichen, Gießen, Tauchen, Spritzen und dergleichen in die Form des fertigen Produkts gebracht. Anschließend erfolgt durch Erwärmung die "Gelierung"; die Weichmacher lösen die Polymerteilchen auf. Nach dem Abkühlen erhält man so ein homogenes, mehr oder weniger flexibles Produkt.

Von großer Bedeutung sind schäumbare Plastisole, die neben den üblichen Komponenten noch geeignete Treibmittel und gegebenenfalls "Kicker" enthalten. In diesem Zusammenhang versteht man unter einem "Kicker" eine Verbindung, die die Bildung des Schaums durch Zersetzung des Treibmittels in geeigneter Weise unterstützt. Durch Erwärmung wird neben der Gelierung die Zersetzung des Treibmittels bewirkt, man erhält dementsprechend geschäumte Plastisole, die beispielsweise als Dämpfungs- und Isolierungsmaterialen verwendet werden.

Das Anwendungsgebiet der geschäumten Plastisole wird durch die Zellstruktur bestimmt. Es können offene oder geschlossene, wenige große oder viele kleine Poren vorliegen. Die Anzahl der Poren sowie ihre Größe und Größenverteilung kann innerhalb des Schaums variieren. Weiterhin können Inhomogenitäten infolge eines unvollständigen Gelierens vorliegen, die eine Verschlechterung der mechanischen und optischen Eigenschaften der Schäume zur Folge haben. Wünschenswert sind Plastisolschäume mit guten elastischen Eigenschaften, wie beispielsweise einem guten Rückstellvermögen, die viele kleine Poren aufweisen. Die geschäumten Schichten sollen möglichst einheitlich und frei von Inhomogenitäten sein.

Darüber hinaus müssen schäumbaren Plastisole - teilweise in Abhängigkeit vom angestrebten Anwendungszweck - weiteren Anforderungen genügen. Hierbei spielen unter anderem die rheologischen Eigenschaften des schäumbaren Plastisols, insbesondere seine Viskosität, die Lagerstabilität des schäumbaren Plastisols, die Weichmacherverträglichkeit sowie die mechanischen Eigenschaften der aus dem schäumbaren Plastisol gefertigten Produkte entscheidende Rollen. Auch das Verhältnis von Harz (Bindemittel oder Polymer) zu Weichmacher ist für viele Anwendungen wichtig.

Von der Technik werden weiterhin schäumbare Plastisole gefordert, die leicht verarbeitbar sind. Sie sollen ein möglichst breites Spektrum an Verarbeitungstechniken zulassen und bei möglichst tiefer Temperatur verarbeitbar sein. Erst durch Erwärmen und anschließendes Abkühlen sollen die schäumbaren Plastisole zu einer einheitlichen festen, geschäumten Schicht gelieren.

Prinzipiell sind Bindemittel auf der Basis verschiedenster Polymere denkbar. Zur technischen Anwendung sind allerdings nur sehr wenige Polymere gekommen. Die weitaus bedeutendste Klasse von Polymeren, die für diesen Zweck eingesetzt werden, leitet sich vom Polyvinylchlorid (PVC) ab. Unter ökologischen Gesichtspunkten scheint es allerdings sehr zweckmäßig, die schäumbaren PVC-Plastisole durch umweltfreundlichere schäumbare Plastisole zu substituieren. Hierfür stehen beispielsweise auch schäumbare Plastisole auf der Basis von Poly(meth)acrylaten seit einiger Zeit zur Verfügung.

JP 11035784 offenbart ein gegebenenfalls geschäumtes Plastisol aufweisend eine Kombination aus acrylischen Polymerpartikeln und einem Weichmacher, wobei die acrylischen Polymerpartikel eine Kern-Schale-Struktur besitzen. Der Kern besteht aus einem vernetzten Polymer mit einer Glasübergangstemperatur kleiner gleich 30°C. Die Schale besteht aus einem nicht vernetzten Polymer mit einer Glasübergangstemperatur größer gleich 50°C. Obwohl die auf diesen Kern-Schale Polymerisaten basierenden geschäumten Plastisole einige brauchbare Materialeigenschaften, wie eine gute Flexibilität und Elastizität besitzen, ist ihre technische Anwendbarkeit aufgrund einer Reihe von Nachteilen begrenzt. Zu einem ist die Quellbarkeit und damit die Elastizität der Kerne durch die Anwesenheit der Netzpunkte beschränkt, welches die Flexibilität limitiert. Darüber hinaus werden in bespielhaften Rezepturen von JP 11035784 Verdünner bzw. Viskositätserniedriger, wie Terpene verwendet, um akzeptable Bindemittelgehalte zu erreichen. Der Einsatz von Viskositätsverdünnern ist jedoch stets mit Qualitätseinbußen verbunden. Somit ist zu erwarten, daß die resultierenden Schichten schlechte Materialeigenschaften, beispielsweise hinsichtlich des E-Moduls besitzen.

In Anbetracht des hierin vorstehend zitierten und diskutierten Standes der Technik lag der vorliegenden Erfindung die Aufgabe zugrunde, ein schäumbares Plastisol anzugeben, bei dem das üblicherweise eingesetzte Bindemittel PVC durch Poly(meth)acrylate substituiert ist, ohne daß schlechtere Eigenschaften des geschäumten Plastisols, vor allem hinsichtlich seines Rückstellvermögens in Kauf genommen werden müssen.

Insbesondere war es eine Aufgabe der vorliegenden Erfindung, ein schäumbares Plastisol auf Basis von Poly (meth)acrylaten, Weichmacher und Treibmittel für Schäume mit verbessertem Rückstellvermögen anzugeben, das leicht verarbeitbar ist.

Eine der Erfindung zugrundeliegende Aufgabe bestand darin, ein kostengünstiges Bindemittel zur Verfügung zu stellen.

Eine weitere Aufgabe ist darin zu erblicken, daß ein schäumbares Poly(meth)acrylatplastisol mit guter Verträglichkeit für kostengünstige Weichmacher, insbesondere aus der Klasse der längerkettigen Diester der Phthalsäure, zu finden ist.

Noch eine Aufgabe, welche der Erfindung zugrundeliegt, besteht darin, ein schäumbares Plastisol anzugeben, das eine geeignete Viskosität und Viskositätsstabilität besitzt.

Eine der Erfindung zugrundeliegende Aufgabe war auch, ein Verfahren zur Herstellung von schäumbaren Plastisole anzugeben, welches einfach und kostengünstig durchführbar ist.

Ein weitere Aufgabe der Erfindung war schließlich auch die Verwendung von schäumbaren Plastisolen zur Herstellung geformter Gegenstände, insbesondere von Folien, Beschichtungen und Fußbodenbelägen.

Noch eine Aufgabe ist in der Bereitstellung von gelierten und/oder geschäumten geformten Gegenständen zu sehen, die über ein sehr gutes Rückstellvermögen verfügen.

Diese und nicht näher genannte weitere Aufgaben, die sich jedoch wie selbstverständlich oder in naheliegender Weise aus der einleitenden Erörterung des Standes der Technik ergeben, beziehungsweise ableiten lassen, werden im Rahmen der Erfindung durch ein schäumbares Plastisol des Anspruchs 1 gelöst. Vorteilhafte Ausgestaltungen der erfindungsgemäßen schäumbaren Plastisole werden in den auf Anspruch 1 direkt oder indirekt rückbezogenen Ansprüchen unter Schutz gestellt.

Dadurch, daß ein schäumbares Plastisol für einen Schaum mit verbessertem Rückstellvermögen, enthaltend

I. 12,5 bis 99,2 Gew.-% bezogen auf das Gesamtgewicht des schäumbaren Plastisols eines oder mehrerer Polymerisate und/oder Copolymerisate von (Meth)acrylaten erhältlich durch Polymerisation von Zusammensetzungen enthaltend als polymerisierbare Bestandteile

A) 20 bis 100 Gew.-% Methylmethacrylat,
B) 0 bis 80 Gew.-% eines von Methylmethacrylat verschiedenen (Meth)acrylats der Formel I,

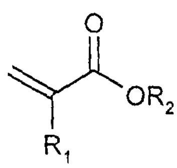

(I)

worin

$R_1$ für Wasserstoff oder Methyl und
$R_2$ für einen linearen oder verzweigten, aliphatischen oder aromatischen Rest mit 1 bis 18 Kohlenstoffatomen steht,

C) 0 bis 40 Gew.-% eines weiteren von A) und B) verschiedenen vinylisch ungesättigten Monomeren und
D) 0 bis 40 Gew.-% eines haftungsvermittelnden Monomeren, wobei A) bis D) 100 Gew.-% der polymerisierbaren Bestandteile ergeben,

II. 0,5 bis 80 Gew.-% mit den Polymerisaten und/oder Copolymerisaten aus I. verträgliche Weichmacher bezogen auf das Gesamtgewicht des schäumbaren Plastisols;
III. 0 bis 87,5 Gew.-% anorganische Füllstoffe bezogen auf das Gesamtgewicht des schäumbaren Plastisols;
IV. 0,1 bis 10 Gew.-% eines oder mehrerer Treibmittel bezogen auf das Gesamtgewicht des schäumbaren Plastisols;
V. 0,1 bis 5 Gew.-% eines oder mehrerer Kicker bezogen auf das Gesamtgewicht des schäumbaren Plastisols und
VI. 0,1 bis 3 Gew.-% eines oder mehrerer Zusatzstoffe in Mengen bezogen auf das Gesamtgewicht des schäumbaren Plastisols,

wobei I. bis VI. 100 Gew.-% des schäumbaren Plastisols ergeben,
sich dadurch auszeichnet, daß wenigstens ein Teil der Polymerisate und/oder Copolymerisate aus I. eine Kern-Schale-Struktur bestehend aus einem Kern und mindestens einer Schale aufweist, wobei

(i) der Kern Polymerketten mit einem Gewichtsmittel des Molekulargewichts $\overline{M_W}$ zwischen 10.000 g/mol und 1.000.000 g/mol aufweist, und
(ii) eine Schale aus Polymerketten mit einem Gewichtsmittel des Molekulargewichts $\overline{M_W}$ größer 1.000.000 g/mol besteht,

gelingt es auf nicht ohne weiteres vorhersehbare Weise eine Reihe von Vorteilen zu erzielen. Hierzu gehören unter anderem:

- Die Herstellungskosten der erfindungsgemäßen schäumbaren Poly(meth)acrylatplastisole sind im Vergleich mit den in JP 11035784 offenbarten Plastisolen deutlich niedriger.

- Die Lagerstabilität erfindungsgemäßer schäumbarer Poly(meth)acrylat-Plastisole ist hervorragend. Dadurch können Produkte gemäß der Erfindung auch für Anwendungen Einsatz finden, bei denen das schäumbare Plastisol vor dem Verarbeiten länger gelagert werden muß.

- Erfindungsgemäße schäumbare Plastisole können mit einem hohen Bindemittelgehalt hergestellt werden. Ein Zusatz von Verdünnern oder Viskositätserniedriger ist im Gegensatz zum Stand der Technik nicht erforderlich. Der höhere Bindemittelgehalt gemäß der Erfindung ohne Weichmacherersatzstoffe führt dazu, daß die Tendenz der gelierten Schichten, Weichmacher auszudampfen oder gar auszuschwitzen, deutlich eingeschränkt oder gar vollkommen unterbunden wird.

- Durch den höheren Bindemittelgehalt ist es möglich, Dialkylphthalate (z.B. Dioctylphthalat, Di-isononylphthalat, etc.) für schäumbare Poly(meth)acrylat-Plastisole, vorzugsweise schäumbare PMMA-Plastisole, zu verwenden, ohne daß diese zu einer Phasenseparation im gelierten Zustand führen. Durch den Einsatz dieser preiswerten Weichmacher gelingt es, das Gesamtprodukt bestehend aus Bindemittel und Weichmacher für den Verarbeiter deutlich günstiger und einfacher zu gestalten.

- Durch den höheren Bindemittelgehalt gelingt es zudem, gelierte Schichten zu erhalten, die verglichen mit Produkten nach dem Stand der Technik eine signifikant bessere Mechanik besitzen. So steigt beispielsweise die Reißfestigkeit der Schichten.

- Höhere Bindemittelgehalte unter Verzicht auf "Verdünner" bewirken auch wesentliche Verbesserungen im Bezug auf den E-Modul von den resultierenden Schichten.

- Das Eigenschaftsspektrum erfindungsgemäßer schäumbaren Plastisole weist eine große Ausgewogenheit und insbesonders Verbesserungen hinsichtlich einer Kombination von Lagerstabilität, Weichmacherverträglichkeit mit einem erhöhten Bindemittelgehalt bei den schäumbaren Plastisolen und verbesserten mechanischen Eigenschaften, insbesondere einem sehr guten Rückstellvermögen, der daraus hergestellten Schichten auf.

- Schäumbare Plastisole nach der Erfindung verfügen über ein breites und universelles Spektrum von Einsatzmöglichkeiten. Die erfindungsgemäßen schäumbaren Plastisole sind für sämtliche Anwendungen geeignet. Dies betrifft insbesondere die Herstellung geformter Gegenstände, insbesondere von Folien und Beschichtungen.

- Verglichen mit den bekannten Poly(meth)acrylat-Plastisol-Schäumen sind bei gleichem Bindemittelgehalt die Eigenschaften der erfindungsgemäßen Poly(meth)acrylat-Plastisol-Schäume deutlich verbessert. Die Schichten weisen eine geringere Klebrigkeit, eine feinere Porenstruktur und ein wesentlich besseres Rückstellvermögen auf.

Bei den Polymerisaten und/oder Copolymerisaten, die als Bindemittel oder als Bestandteil des Bindemittels in den Poly(meth)acrylat-Plastisolen gemäß der Erfindung einsetzbar sind, handelt es sich um Substanzen, welche durch Polymerisation der polymerisierbaren Komponenten A) bis D) erhältlich sind.
Die Komponente A) ist eine essentielle Komponente. Es handelt sich um Methylmethacrylat, welches 20 bis 100 Gewichtsprozent der polymerisierbaren Bestandteile ausmacht, aus welchen das polymere Bindemittel (I) erhältlich ist.
Falls ihr Anteil 100 Gewichtsprozent ausmacht handelt es sich beim Bindemittel um PMMA-Homopolymeres. Ist der Anteil geringer als 100 Gewichtsprozent liegt ein Co- oder Terpolymer aus 3 oder mehr Monomersorten vor. Das Bindemittel I ist dann ein Co- oder Terpolymerisat.
Die Komponente B) ist dementsprechend optional. Es handelt sich um einen Acrylsäure- oder Methacrylsäureester, welcher vom Methylmethacrylat verschieden ist. Unter linearen oder verzweigtem, aliphatischen oder aroma-

tischen ($C_1$-$C_{18}$)-Rest versteht sich ein Umfang an Resten, der angefangen bei Methylüber Ethyl- bis hin zu einem 18-C-Atome umfassenden Radikal reicht. Mitumfaßt sind auch sämtliche Bindungsisomere, welche innerhalb der Gruppe denkbar sind. Besonders genannt seien das n-Butylmethacrylat, iso-Butylmethacrylat, 2-Ethylhexylmethacrylat, Cyclohexylmethacrylat, Phenylmethacrylat sowie das Naphthylmethacrylat.

Bevorzugt werden in den erfindungsgemäßen Plastisolen (Meth)acrylate eingesetzt, worin der Rest $R_2$ des (Meth)acrylats der Formel I einen linearen oder verzweigten, aliphatischen oder aromatischen ($C_1$-$C_8$)-Rest umfaßt. Hiervon wiederum sind der Methyl-, Ethyl-, i-Butyl- oder n-Butylrest für $R_2$ besonders geeignet.

Die Schreibweise "(Meth)acrylat" bedeutet im Rahmen der Erfindung Acrylat und/oder Methacrylat.

Die polymerisierbare Komponente C) zum Erhalt des Bindemittels I ist optional. Unter von A) und B) verschiedenen Monomeren versteht der Fachmann Styrol und seine Derivate, Vinylester wie z. B. Vinylacetat, Vinylpropionat, Vinylester höherer Alkylsäuren, Maleinsäureanhydrid, Itaconsäure und seine Ester, Olefine wie z. B. Ethen, Propen, Isobuten und dergleichen.

Die polymerisierbare Komponente D) des Bindemittels I ist optional. Unter den haftungsverbessernden Monomeren als Bestandteile der Polymeren seien solche radikalisch polymerisierbaren Monomeren verstanden, welche funktionelle Gruppen besitzen, die mit den Materialien, die beschichtet werden sollen, in Wechselwirkung treten können. Eine derartige Wechselwirkung kann z. B. durch Wasserstoffbrückenbildung, Komplexierung, Dipolkräfte u. ä. zustande kommen, an denen in der Regel Heteroatome wie Stickstoff oder Sauerstoff beteiligt sind. Genannt seien als funktionale Gruppen die Amino-, insbesondere die Dialkylamino-, (cyclische) Amid-, Imid-, Hydroxy-, Oxy-, Carboxyl-, Cyano-Gruppe. Derartige Monomere sind an sich bekannt (vgl. H. Rauch Puntigam, Th. Völker, Acryl- und Methacrylverbindungen, Springer-Verlag 1967; Kirk-Othmer, Encyclopedia of Chemical Technology, 3rd. Ed., Vol. 1, pp. 394-400, J. Wiley 1978; DE-A 25 56 080; DE-A 26 34 003).

Vorzugsweise gehören die haftungsverbessernden Monomeren daher der Monomerklasse der stickstoffhaltigen Vinylheterocyclen mit vorzugsweise 5-Ringen neben 6-Ringen, und/oder der copolymerisierbaren vinylischen Carbonsäuren und/oder der Hydroxyalkyl-, Alkoxyalkyl- und der Aminoalkylsubstituierten Ester oder Amiden der Acryl- und Methacrylsäure an.

Als Stickstoff-heterocyclische Monomere seien insbesondere solche aus der Klasse der Vinylimidazole, der Vinyllactame, der Vinylcarbazole und der Vinylpyridine genannt. Beispiele, die keinerlei Beschränkung darstellen sollen, für diese monomeren Imidazolverbindungen sind N-Vinyl-imidazol (auch Vinyl-1-imidazol genannt), N-Vinyl-methyl-2-imidazol, N-Vinyl-ethyl-2-irnidazol, N-Vinyl-phenyl-2-imidazol, N-Vinyl-dimethyl-2,4-imidazol, N-Vinyl-benzimidazol, N-Vinylimidazolin (auch Vinyl-1-imidazolin genannt), N-Vinyl-methyl-2-imidazolin, N-Vinyl-phenyl-2-imidazolin und Vinyl-2-imidazol.

Als Beispiele für Monomere, die sich von den Lactamen ableiten, lassen sich insbesondere Verbindungen wie die folgenden anführen: N-Vinylpyrrolidon, N-Vinylmethyl-5-pyrrolidon, N-Vinylmethyl-3-pyrrolidon, N-Vinyläthyl-5-pyrrolidon, N-Vinyldimethyl-5,5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allylcaprolactam, N-Vinylcapryllactam.

Unter den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-l-ethylen)carbazol. Unter den copolymerisierbaren vinylischen Carbonsäuren seien insbesondere die Acryl- und die Methacrylsäure bzw. geeignete Salze derselben genannt.

Ferner seien die folgenden oxy- und/oder alkoxysubstituierten Alkylester der (Meth)acrylsäure angeführt: 2-Hydroxyethyl(meth)acrylat, Hydroxypropyl(meth)acrylat, 2-Methoxy-ethyl(meth)acrylat, 2-Ethoxyethyl(meth)acrylat, 2-Butoxyethyl(meth)acrylat, 2-(2-Butoxyethoxy)ethylmeth-acrylat, 2-(Ethoxyethyloxy)ethyl(meth)acrylat, 4-Hydroxybutyl(meth)acrylat, 2-[2-(2-Ethoxy-ethoxy)ethoxy]-ethyl(meth)acrylat, 3-Methoxybutyl-1-(meth)acrylat, 2-Alkoxymethylethyl(meth)acrylat, 2-Hexoxyethyl(meth)acrylat.

Weiterhin seien die folgenden aminsubstituierten Alkylester der (Meth)acrylsäure genannt:
2-Dimethylaminoethyl(meth)acrylat, 2-Diethylaminoethyl-(meth)acrylat, 3-Dimethylamino-2,2-dimethylpropyl-1-(meth)acrylat, 3-Dimethylamino-2,2-dimethylpropyl-1-(meth)acrylat, 2-Morpholinoethyl(meth)-acrylat, 2-tert.-Butylaminoethyl(meth)acrylat, 3-(Dimethylamino)propyl-(meth)acrylat, 2-(Dimethylaminoethoxyethyl)-(meth)acrylat.

Als Vertreter der (Meth)acrylamide seien beispielsweise die folgenden Monomeren genannt:
N-Methyl(meth)acrylamid, N-Dimethylaminoethyl(meth)-acrylamid, N-Dimethylaminopropyl(meth)acrylamid, N-Isopropyl(meth)acrylamid, N-tert.-Butyl(meth)acrylamid, N-Isobutyl(meth)acrylamid, N-Decyl(meth)acrylamid, N-Cyclohexyl(meth)acrylamid, N-[3-(Dimethylamino)2,2-dimethylpropyl]-methacrylamid, N-[2-Hydroxyethyl](meth)-acrylamid.

Gemäß der vorliegenden Erfindung weist wenigstens ein Teil der Polymerisate und/oder Copolymerisate aus I. eine Kern-Schale-Struktur bestehend aus einem Kern und mindestens einer Schale auf, wobei

(i) der Kern Polymerketten mit einem Gewichtsmittel des Molekulargewichts $\overline{M_W}$ zwischen 10.000 g/mol und 1.000.000 g/mol aufweist, und

(ii) eine Schale aus Polymerketten mit einem Gewichtsmittel des Molekulargewichts $\overline{M_W}$ größer 1.000.000 g/mol besteht.

In einer bevorzugten Ausführungsfprm der vorliegenden Erfindung weist das Kern-Schale polymerisat und/ oder Copolymerisat genau eine Schale auf.

Im Rahmen der vorliegenden Erfindung ist es ebenfalls bevorzugt, daß mindestens eine Schale des Ken-Schale-Polymerisats und/oder Copolymerisats den Kern vollständig umschließt.

Die Herstellung solcher polymerer (Meth)acrylate mit einer Kern-Schale Struktur bestehend aus einem Kern und mindestens einer Schale für den Einsatz in schäumbaren Plastisolen ist dem Fachmann bekannt. Sie kann durch bestimmte Verfahrensweisen bei der Emulsionspolymerisation erfolgen. Beispielsweise wird eine erste Monomermischung in wäßriger Emulsion in der Vorstufe zu einem sogenanten "Saatlatex" auspolymerisiert. Zu dem Saatlatex werden die Monomerbestandteile des eigentlichen Kerns unter solchen Bedingungen zugegeben, daß die Bildung neuer Teilchen vermieden wird. Dadurch wird das in der ersten Verfahrensstufe entstehende Polymerisat schalenförmig um das Saatlatex herum gelagert. Analog werden die Monomerbestandteile des Schalenmaterials unter solchen Bedingungen zu dem Emulsionspolymerisat zugegeben, daß die Bildung neuer Teilchen vermieden wird. Dadurch wird das in der zweiten Stufe entstehende Polymerisat schalenförmig um den bestehenden Kern herum gelagert. Diese Vorgehensweise ist für jede weitere Schale entsprechend zu wiederholen.

Alternativ können die erfindungsgemäßen Kern-Schale-Polymerisate und/oder Copolymerisate auch durch ein Emulsionspolymerisationsverfahren erhalten werden, bei dem man anstatt des Saatlatexes einen langkettigen, aliphatischen Alkohol, vorzugsweise mit 12 bis 20 Kohlenstoffatomen, emulgiert vorlegt. In einer bevorzugten Ausführungsform dieses Verfahrens wird Stearylalkohol als langkettiger, aliphatischer Alkohol verwendet. Die Kern-Schale-Struktur wird analog zur oben beschriebenen Vorgehensweise durch schrittweise Zugabe und Polymerisation der entsprechenden Monomere unter Vermeidung der Bildung neuer Teilchen erhalten. Weitere Einzelheiten zum Polymerisationsverfahren kann der Fachmann den Patentschriften DE 3343766, DE 3210891, DE 2850105, DE 2742178 und DE 3701579 entnehmen.

Zur Herstellung des Saatlatexes oder wäßrigen Emulsion des langkettigen aliphatischen Alkohols werden 0,01 bis 3 Gew.-%, bezogen auf das Monomer an anionischen, kationischen oder nicht-ionischen Emulgiermitteln, wie Natriumlaurylsulfat, Alkylbenzolsulfonate, Oxäthylicrungsprodukte alkylierter Phenole oder deren neutralisierte Sulfierungsprodukte, verwendet. Alle Polymerisationen werden vorzugsweise bei Temperaturen zwischen 60 und 100 °C mit Hilfe wasserlöslicher Radikalbildner, wie Kalium- oder Ammoniumpersulfat oder Wasserstoffperoxyd, ausgelöst. Vor Beginn der Polymerisation des eigentlichen Kerns sowie der Schalen kann erneut Initiator zugesetzt werden, jedoch wird wenig oder gar kein zusätzliches Emulgiermittel in diesen Verfahrensschritten verwendet.

Um die jeweils gewünschten Molekulargewichte zu erreichen, kann der Einsatz von sogenannten "Reglern" zweckmäßig sein. "Regler" bezeichnen Verbindungen mit hohen Übertragungskonstanten während einer radikalischen Polymerisation. Sie beschleunigen Kettenabbruchreaktionen und bewirken damit eine Herabsetzung des Polymerisationsgrades der resultierenden Polymeren, ohne die Bruttoreaktions-Geschwindigkeit signifikant zu beeinflussen. Vielfach verwendete Regler sind Mercaptane, wie beispielsweise 1-Dodecanthiol, Halogenmethane, wie Tri- und Tetrachlormethan, Aldehyde, Acetale u.a.. Die Abhängigkeit des Polymerisationsgrades vom Verhältnis von Regler zu Monomer ist dem Fachmann bestens bekannt.

Grundsätzlich eignen sich alle vorstehend angegebenen Monomere, insbesondere Methylmethacrylat, ggf. auch die Monomeren der Gruppe B, zur Herstellung dieser Kern-Schale-Polymerisate. Vorzugsweise besteht der Kern aus unelastischen Polymerisaten und/oder Copolymerisaten des (Meth)acrylats. Unter unelastischen Polymerisaten und/oder Copolymerisaten werden in diesem Zusammenhang Polymerisate und/oder Copolymerisate mit einer Glastemperatur oberhalb Raumtemperatur, vorzugsweise oberhalb 30°C verstanden. Es ist ebenfalls bevorzugt, daß mindestens Schale des Kern-Schale-Polymerisats aus unelastischen Polymerisaten und/oder Copolymerisaten bestehen.

Methoden zur Bestimmung der Mittelwerte des Molekulargewichts, insbesondere des Gewichtsmittel des Molekulargewichts $\overline{M_W}$ von den Polymeren und/oder Copolymeren sind dem Fachmann bekannt. Sie kann beispielsweise erfolgen, indem man jeweils nach Beendigung eines Polymerisationsschrittes eine Probe entnimmt und in üblicher Weise mittels SEC oder GPC (size exclusion chromatography oder gel permeations chromatography) gegenüber Standards aus Polystyrol charakterisiert. Die SEC bzw. GPC sind dem Polymerfachmann bekannte Analysenmethoden zur Bestimmung der Mittelwerte des Molekulargewichts.

Vorzugsweise weist der Kern Polymerketten mit einem Gewichtsmittel des Molekulargewichts $\overline{M_W}$ zwischen 50.000 g/mol und 500.000 g/mol auf. Weiterhin ist es bevorzugt, daß eine Schale aus Polymerketten mit einem Gewichtsmittel des Molekulargewichts $\overline{M_W}$ größer 2.000.000 g/mol besteht.

In einer bevorzugten Ausführungsform der Erfindung macht der Kern des Kern-Schale-Polymerisates und/ oder Copolymerisates zwischen 25 und 75 Gew.-% des gesamten Kern-Schale-Polymerisats und/oder Copolymerisates aus.

In einer weiteren bevorzugten Ausführungsform der Erfindung macht eine Schale des Kern-Schale-Polymerisates und/oder Copolymerisates zwischen 25 und 75 Gew.-% des gesamten Kern-Schale-Polymerisats und/oder Copolymerisates aus.

Auch hinsichtlich der mittleren Teilchengröße der Kern-Schale-Polymerisate und/oder Copolymerisate bestehen für die Erfindung besonders zweckmäßige Bereiche. Besonders günstige schäumbare Plastisole gemäß der Erfindung sind solche, die Kern-Schale-Polymerisate und/oder Copolymerisate mit einem mittleren Teilchendurchmesser im Bereich zwischen 300 und 1500 nm aufweisen.

Eine weitere Verbesserung der Eigenschaften erfindungsgemäßer schäumbarer Plastisole läßt sich unter anderem auch dadurch erzielen, daß das Bindemittel neben den Kern-Schale-Polymeren weiterhin durch ein einstufiges Polymerisationsverfahren erhältliche Polymerisate und/oder Copolymerisate mit einem bestimmten Molekulargewicht aufweist. Eine bevorzugte Variante sieht vor, daß das Gewichtsmittel des Molekulargewichts $\overline{M_W}$ dieses Teils der Polymerisate und/oder Copolymerisate der (Meth)acrylate größer 1.000.000 g/mol ist. Hierdurch kann es äußerst vorteilhaft gelingen, noch lagerstabilere schäumbare Plastisole mit einer noch geringeren Viskosität herzustellen. Die Verwendung von Polymerisaten und/oder Copolymerisaten von (Meth)acrylaten mit relativ hohen Molekulargewichten und damit mit relativ langen Ketten der Polymeren führt unerwartet zu einer Erniedrigung der Viskosität der Plastisole.

Besonders vorteilhafte Eigenschaften der schäumbaren Plastisole erhält man, wenn das Gewichtsmittel des Molekulargewichts $\overline{M_W}$ dieses Teils der Polymerisate und/oder Copolymerisate des eingesetzten (Meth)acrylats in den schäumbaren Plastisolen größer 2.000.000 g/mol ist. Ganz besonders vorteilhafte Eigenschaften erhält man, wenn das Gewichtsmittel des Molekulargewichts $\overline{M_W}$ dieses Teils der Polymerisate und/oder Copolymerisate des eingesetzten (Meth)acrylats in den schäumbaren Plastisolen größer 3.000.000 g/mol ist.

Das Gewichtsmittel des Molekulargewichts $\overline{M_W}$ dieser Polymere wird für die Zwecke der Erfindung ebenfalls mittels SEC oder GPC (size exclusion chromatography oder gel permeations chromatography) gegenüber Standards aus Polystyrol bestimmt. Die SEC oder GPC sind dem Polymerfachmann bekannte Analysenmethoden zur Bestimmung der Mittelwerte des Molekulargewichts.

Eine weitere im Rahmen der Erfindung anwendbare Größe zur Kennzeichnung der Molmasse dieses Teils der eingesetzten Polymerisate und/oder Copolymerisate ist die Viskositätszahl VZ. Die Viskositätszahl wird in Anlehnung an DIN 51 562 Teil 1 und 3 (Stand Januar 1983 bzw. Mai 1985), nach DIN 7745 Teil 2, Anhang A bis C, Stand April 1989 bestimmt.

Erfindungsgemäße schäumbare Plastisole enthalten somit in bevorzugter Ausführungsform durch ein einstufiges Polymerisationsverfahren erhältliche Polymerisate und/oder Copolymerisate mit VZ ≥ 300, vorzugsweise > 300, zweckmäβig > 600, besonders bevorzugt > 900, ganz besonders bevorzugt > 1200.

Die Herstellung polymerer (Meth)acrylate mit einem bestimmten Gewichtsmittel des Molekulargewichts $\overline{M_W}$ für den Einsatz in Plastisolen ist dem Fachmann bekannt. Sie kann beispielsweise auf dem Wege der Emulsionspolymerisation erfolgen.

Die mittlere Teilchengröße von den durch ein einstufiges Polymerisationsverfahren erhältliche Polymerisaten und/oder Copolymerisaten der (Meth)acrylate mit einem Gewichtsmittel des Molekulargewichts $\overline{M_W}$ größer 1.000.000 g/mol kann ebenfalls von Bedeutung sein. Besonders günstige schäumbare Plastisole gemäß der Erfindung weisen die entsprechenden Polymerisate und/oder Copolymerisate der (Meth)acrylate mit einem mittleren Teilchendurchmesser im Bereich zwischen 50 und 600 nm auf. Ganz besonders günstige schäumbare Plastisole gemäß der Erfindung weisen die entsprechenden Polymerisate und/oder Copolymerisate der (Meth)acrylate mit einem mittleren Teilchendurchmesser im Bereich zwischen 100 und 600 nm auf.

In einer bevorzugten Ausführungsform der Erfindung weisen die Polymerisate und/oder Copolymerisate I der schäumbaren Plastisole neben

(a) 99,9 bis 0,1 Gew.-% bezogen auf das Gesamtgewicht der Polymerisate und/oder Copolymerisate aus I. Polymere und/oder Copolymere mit einer Kern-Schale-Struktur bestehend aus einem Kern und mindestens einer Schale,

(b) 0,1 bis 99,9 Gew.-% bezogen auf das Gesamtgewicht der Polymerisate und/oder Copolymerisate aus I. durch ein einstufiges Polymerisationsverfahren erhältliche Polymere und/oder Copolymere mit einem Gewichtsmittel des Molekulargewichts $\overline{M_W}$ größer 1.000.000 g/mol auf,

wobei (a) und (b) 100 Gew.-% der Polymerisate und/oder Copolymerisate aus I. ergeben.

In einer besonders bevorzugten Ausführungsform der Erfindung weisen die Polymerisate und/oder Copolymerisate I der schäumbaren Plastisole neben

(a) 90 bis 10 Gew.-% bezogen auf das Gesamtgewicht der Polymerisate und/oder Copolymerisate aus I. Polymere und/oder Copolymere mit einer Kern-Schale-Struktur bestehend aus einem Kern und mindestens einer Schale,

(b) 10 bis 90 Gew.-% bezogen auf das Gesamtgewicht der Polymerisate und/oder Copolymerisate aus I. durch ein einstufiges Polymerisationsverfahren erhältliche Polymere und/oder Copolymere mit einem Gewichtsmittel des Molekulargewichts $\overline{M_W}$ größer 1.000.000 g/mol auf,

wobei (a) und (b) 100 Gew.-% der Polymerisate und/oder Copolymerisate aus I. ergeben.

In einer ganz besonders bevorzugten Ausführungsform der Erfindung weisen die Polymerisate und/oder Copolymerisate I der schäumbaren Plastisole neben

(a) 85 bis 60 Gew.-% bezogen auf das Gesamtgewicht der Polymerisate und/oder Copolymerisate aus I. Polymere und/oder Copolymere mit einer Kern-Schale-Struktur bestehend aus einem Kern und mindestens einer Schale,

(b) 15 bis 40 Gew.-% bezogen auf das Gesamtgewicht der Polymerisate und/oder Copolymerisate aus I. durch ein einstufiges Polymerisationsverfahren erhältliche Polymere und/oder Copolymere mit einem Gewichtsmittel des Molekulargewichts $\overline{M_W}$ größer 1.000.000 g/mol auf,
wobei (a) und (b) 100 Gew.-% der Polymerisate und/oder Copolymerisate aus I. ergeben.

Es ist ebenfalls bevorzugt, daß die schäumbaren Plastisole der vorliegenden Erfindung Polymerisate und/oder Copolymerisate der (Meth)acrylate mit einer bioder multimodalen Teilchengrößenverteilung aufweisen. Eine bi-, mehr- oder multimodale Verteilung der Primärteilchengrößen des Poly(meth)acrylats im Sinne der Erfindung liegt dann vor, wenn eine Probe des als oder im Bindemittel eingesetzten Polymers bei einer Analyse nach der PIDS-Methode mit dem Laserpartikelanalysator Coulter LS230 unter Berücksichtigung der optischen Parameter der Partikel und der Suspensionsflüssigkeit (mindestens) zwei Peaks im Verteilungsspektrum aufweist. Insbesonders wird bei Bestimmung der Partikelgrößenverteilung die Größenverteilung von Primärteilchen in Dispersionen zugrundegelegt. Nach Trocknung der Dispersion oder der Dispersionen können die Primärteilchen aus der Dispersion zu Sekundärteilchen mit einer anderen Teilchengrößenverteilung agglomeriert sein. Dies hat jedoch auf die Wirkung des Bindemittels und im Bezug auf die Eigenschaften des Plastisols und daraus erhältlicher Produkte keinen wesentlichen negativen Einfluß.

Zu den im Rahmen der Erfindung mit Erfolg einsetzbaren Weichmachern II gehören unter anderem Verbindungen aus den Gruppen der Phthalate, Adipate, Trimellitate, Phosphatester, Sebacate und Azetate sowie Polyester und Sulfonate. Hierzu gehören unter anderem Dibutylphthalat, Diisobutylphthalat, Dihexylphthalat, Diheptylphthalat, Diisoheptylphthalat, L79phthalat, L711phthalat, Dioctylphthalat, Diisooctylphthalat, Dinonylphthalat, Diisononylphthalat, Didecylphthalat, Diisodecylphthalat, L911phthalat, Diundecylphthalat, Diisoundecylphthalat, Undecyldodecylphthalat, Didodecylphthalat, Diisotridecylphthalat, Butylbenzylphthalat, Diethylhexylphthalat, Dioctyladipat, Diisononyladipat, Diisodecyladipat, Trioctyltrimellitat, L79trimellitat, L810trimellitat, Tri-2-ethylhexylphosphat, 2-Ethylhexyldiphenylphosphat (Sanctizer 141), Trikresylphosphat, Di-2-ethylhexylsebacat, Di-2-ethylhexylazelat, Kondensationsprodukt aus Propan-und/oder Butandiol mit Adipin- und/oder Phthalsäureanhydrid und/oder Arylester von $C_{13}$-$C_{15}$-Sulfonsäuren.

Von besonderem Interesse für die Erfindung sind schäumbare Plastisole, in welchen der Weichmacher II ein Diester der Phthalsäure ist, wobei die Estergruppen sich von linearen oder verzweigten Alkoholen mit 4 bis 24 Kohlenstoffatomen ableiten.

Hiervon geniessen wiederum als Weichmacher II Dibutylphthalat, Diisobutylphthalat, Dihexylphthalat, Diheptylphthalat, Diisoheptylphthalat, L79phthalat, L711phthalat, Dioctylphthalat, Diisooctylphthalat, Dinonylphthalat, Diisononylphthalat, Didecylphthalat, Diisodecylphthalat, L911phthalat, Diundecylphthalat, Diisoundecylphthalat, Undecyldodecylphthalat, Didodecylphthalat, Diisotridecylphthalat, Butylbenzylphthalat und/oder Diethylhexylphthalat außerordentliche Beachtung.

Die vorgenannten Verbindungen können jede für sich allein, oder in Mischungen von zwei oder mehr Verbindungen aus der Aufzählung als Komponente II eingesetzt werden. Die genannten Verbindungen oder Gruppen von Verbindungen können auch mit weiteren weich machenden Verbindungen kombiniert werden. Insbesondere muß es sich im letzteren Fall nicht notwendigerweise um Esterverbindungen handeln. Beispielhaft seien genannt: chlorierte Paraffine, Kohlenwasserstoffe, Trialkylphosphate, aliphatische oder araliphatische Polyester sowie sonstige polymere Weichmacher wie z. B. Harnstoffweichharze. (Vgl. H. K. Felger, Kunststoff-Handbuch Bd. 1/1C, Hanser-Verlag 1985 sowie in H. F. Mark et al. Encyclopedia of Polymer Science and Engineering, Supplemental Volume pg. 568-647, J. Wiley 1989). Eine Auswahl geeigneter Weichmacher kann auch der DE-C 25 43 542 entnommen werden.

Weiterhin enthalten die schäumbaren Plastisole gewöhnlich noch 0 bis 87,5 Gew.-% an sich bekannte anorganische Füllstoffe III bezogen auf das Gesamtgewicht des schäumbaren Plastisols. Genannt seien beispielsweise Calciumcarbonat (Kreide), Titandioxid, Titandioxid, Calciumoxid, Perlit, gefällte und gecoatete Kreiden als rheologisch wirksame Additive, ferner ggf. Thixotropierungsmittel wie z. B. pyrogene Kieselsäure. Die Korngröße liegt meist im Bereich 5 bis 25 $\mu$ m.

Die erfindungsgemäßen schäumbaren Plastisole enthalten ein oder mehrere Treibmittel IV. Geeignete Treibmittel sind dem Fachmann bekannt. Bevorzugt sind unter anderem Azodicarbonsäurediamide, Sulfohydrazide, Nitrosoverbindungen, Triazole, Tetrazole und Natriumhydrogencarbonat. Ganz besonders bevorzugt ist der Einsatz von Azodicarbonsäurediamiden. Üblicherweise werden die Treibmittel in Mengen von 0,1 bis 10 Gew.-% bezogen auf das Gesamtgewicht des schäumbaren Plastisols eingesetzt, bevorzugt ist eine Menge von 1 bis 5 Gew.-%.

Darüber hinaus enthalten die schäumbaren Plastisole üblicherweise Hilfsstoffe V, sogenannte Kicker, die die Schaumbildung unterstützen. Zu ihnen gehören beispielsweise die Salze des Zinks, Bleis und Cadmiums. Aus ökologischen Gründen werden für schäumbare (Meth)acrylatplastisole Zinksalze bevorzugt. Gewöhnlich wird der Kicker in Mengen von 0 bis 5 Gew.-% bezogen auf das Gesamtgewicht des schäumbaren Plastisols eingesetzt, bevorzugt ist eine Menge von 1 bis 3 Gew.-%.

Weiterhin können die erfindungsgemäßen schäumbaren Plastisole anwendungsbedingt noch bis zu 5 Gew.-% bezogen auf das Gesamtgewicht des schäumbaren Plastisols andere an sich bekannte Zusatzstoffe VI enthalten. Zu dieser Gruppe zählen unter anderem oberflächenaktive Substanzen, die den schäumbaren Plastisolen zugesetzt werden können, um eine regelmäßigere und feinere Zellstruktur zu erhalten, sowie Haftvermittler, Netzmittel, Stabilisatoren, Verlaufsmittel. Erwähnt sei z. B. Calciumstearat als Verlaufsmittel.

Die erfindungsgemäßen schäumbaren Plastisole sind für sämtliche Anwendungen geeignet, wie sie für schäumbare PVC- oder PMMA-Plastisole vorgezeichnet sind. Als solche kommen insbesondere in Betracht Laufschichten für Bodenbeläge, freie transparente Folien, KFZ-Unterbodenschutz, Korrosionsschutz für Metalle, Zwischenschichten für Bodenbeläge (geschäumt), Tapeten, Kunststoff-Planen, Autohimmel, Armaturenbrettverkleidungen, Kronkorken. Besonders bevorzugt ist die Verwendung des erfindungsgemäßen schäumbaren Plastisols zur Herstellung geformter Gegenstände, insbesondere von Folien, Beschichtungen und Fußbodenbelägen. Ganz besonders bevorzugt ist die Verwendung als geschäumte Zwischenschicht in Fußbodenbelägen.

Die erfindungsgemäßen schäumbaren Plastisole können zur Herstellung von geschäumten Schichten verwendet werden, die sehr gute Materialeigenschaften aufweisen. Zum einen besitzen die erfindungsgemäßen geschäumten Plastisol-Schichten - falls überhaupt - nur eine geringe Klebrigkeit. Dies stellt einen großen Vorteil für die großtechnische Produktion solcher erfindungsgemäßen geschäumten Plastisol-Schichten dar, weil die Handhabung dieser erfindungsgemäßen geschäumten Plastisol-Schichten wesentlich erleichtert wird. Die erfindungsgemäßen geschäumten Plastisol-Schichten weisen eine geringere Schmutzadhäsion auf und ihre Zwischenlagerung ist durch Stapelung platzsparend möglich, weil zwei Lagen geschäumter Plastisol-Schichten nicht miteinander verkleben, sondern ohne Kraftaufwand wieder getrennt werden können.

Im Rahmen der vorliegenden Erfindung wird die Klebrigkeit auf folgende Weise bestimmt. Auf die geschäumte Plastisol-Schicht (Oberflächengröße: Din A4) wird ein unbehandeltes Blatt Papier (80 $g/m^2$; Din A4) gelegt. Die mit dem Blatt Papier bedeckte geschäumte Plastisol-Schicht wird um 180 Grad gedreht, sodaß das Blatt Papier nach unten zeigt. Fällt das Blatt Papier innerhalb einer Sekunde herunter, so wird die geschäumte Plastisol-Schicht als nicht klebrig bezeichnet. Fällt das Blatt Papier in eine Zeitspanne zwischen einer und 60 Sekunden herunter, so wird die geschäumte Plastisol-Schicht als schwach klebrig bezeichnet. Bleibt das Blatt Papier länger als eine Minute an der geschäumten Plastisol-Schicht haften, so wird die geschäumte Plastisol-Schicht als klebrig bezeichnet.

Weiterhin weisen die erfindungsgemäßen geschäumten Plastisol-Schichten ein sehr gutes Rückstellvermögen auf. Im Rahmen der vorliegenden Erfindung wird das Rückstellvermögen der geschäumten Plastisol-Schichten über das Relaxationsvermögen der geschäumten Plastisol-Schichten nach einem kräftigen Daumendruck beurteilt. Geschäumte Plastisol-Schichten weisen ein sehr gutes Rückstellverrnögen auf, wenn sie innerhalb von fünf Sekunden nach dem Daumendruck vollständig relaxieren, d. h. die ursprüngliche Form wieder annehmen. Geschäumte Plastisol-Schichten besitzen ein mittleres Rückstellvermögen, wenn sie zur vollständigen Relaxation zwischen fünf und 60 Sekunden (nach dem Daumendruck) benötigen. Geschäumte Plastisol-Schichten besitzen ein schlechtes Rückstellvermögen, wenn sie innerhalb einer Minute nach dem Daumendruck nur unvollständig relaxieren.

Die erfindungsgemäßen geschäumten Plastisol-Schichten besitzen eine feinporige Struktur. Unter einer feinporigen Struktur wird in diesem Zusammenhang verstanden, daß der mittlere Porendurchmesser der Poren von den erfindungsgemäßen geschäumten Plastisol-Schichten kleiner oder gleich 1 mm ist. Ist der mittlere Porendurchmesser der Poren von den erfindungsgemäßen geschäumten Plastisol-Schichten größer 1 mm, so wird eine solche Struktur als grobporig bezeichnet. Der Zusammenhang zwischen der Porosität der erfindungsgemäßen geschäumten Plastisol-Schichten und einer Reihe von Materialeigenschaften ist dem Fachmann wohlbekannt.

Gegenstand der vorliegenden Erfindung sind weiterhin die durch Gelieren und gegebenenfalls Schäumen des erfindungsgemäßen schäumbaren Plastisols erhältlichen geformten Gegenstände.

Gegenstand der Erfindung ist auch ein Verfahren zur Herstellung von schäumbaren Plastisolen, bei welchem man die Komponenten I, II, III, IV, V und VI, sowie gegebenenfalls weitere an sich bekannte Zusätze geeignet miteinander mischt, wobei sich das Verfahren der Erfindung dadurch auszeichnet, daß man Polymerisate und/oder Copolymerisate I, die teilweise eine Kern-Schale Struktur mit einem Kern und mindestens zwei Schalen aufweisen, einsetzt. In bevorzugten Ausführungsformen der Erfindung werden als Polymerisat und/oder Copolymerisat eine physikalische Mischung zweier Emulsionspolymerisate eingesetzt. In einer besonders bevorzugten Ausführungsform werden als

Komponente I eine Mischung von einer vorher getrockneten Dispersion eines Kern-Schale-Polymerisats aufweisend einen Kern und mindestens 2 Schalen mit einer vorher getrockneten Dispersion eines Poly(meth)acrylpolymerisats mit einem Gewichtsmittel des Molekulargewichts $\overline{M_W}$ größer 1.000.000 g/mol verwendet.

Beispiele/ Vergleichsbeispiele

Die Beispiele beschreiben lediglich die Synthese von reinen PMMA-Polymeren. Diese sind nicht ausschließend zu verstehen. Der Einsatz von Comonomeren wie oben beschrieben versteht sich für den Fachmann von selbst. Durch die Comonomerwahl können bestimmte Anforderungen der Technik noch verbessert werden.

Methoden:

- Bestimmung des Feststoffgehalts der Dispersionen Gravimetrisch
- Bestimmung der Teilchengröße der Partikel (Coulter LS230)
- Bestimmung der Molekulargewichtsverteilung GPC: 4 hintereinandergeschaltete Säulen mit Porendurchmesser von $10^6$ Å, $10^5$ Å, $10^4$ Å, $10^3$ Å; hersteller Polymer Laboratories; RI-Detektion; Polymerstandards

Beispiel 1:

Herstellung der Ausgangslösungen:

a) Vorlage:

In einem 5L Reaktor ausgestattet mit einem Rührer, einem Rückflußkühler, einer Dosierpumpe und einem Wasserbad werden unter Stickstoffatmosphäre 1383 g VE Wasser gegeben. 95,5 g eines Saatlatices (Feststoffgehalt: 44,5 %; mittlere Teilchengröße 124 nm) werden unter Stickstoffatmosphäre zugegeben. Diese Vorlage wird unter Rühren durch das Wasserbad auf eine Innentemperatur von 78°C - 80°C gebracht.

In die Vorlage werden zur Initiierung unter Stickstoffatmosphäre 2,4 ml einer 5 %igen wärigen Lösung von Natriumperoxodisulfat und 2,2 ml einer 5 %igen wäßrigen Lösung von Natriumdithionit gegeben (Zeitpunkt t=0).

b) Dosieremulsion

Es wird eine Emulsion aus folgenden Komponenten hergestellt:

| | |
|---|---|
| 2495 g | Methylmethacrylat |
| 1073 g | VE-Wasser |
| 22,4 g | Disponil SUS IC875 (Di-2-ethylhexylsulfosuccinat, Natriumsalz (75 % Aktivsubstanz (Hersteller: Henkel KGaA)) |

Dosierung:

2 Minuten nach Zugabe des Initiatorsystems wird die Dosierung der Dosieremulsion und von 2,5 g Regler (n-Dodecylmercaptan; 0,1 % bezogen auf das Monomer) unter Stickstoffatmosphäre begonnen. Der zeitliche Verlauf der Dosierraten ist in Tabelle 1 wiedergegeben. Nach Beendigung der Reglerdosierung wird eine Probe unter Stickstoffatmosphäre entnommen und charakterisiert (s. Tabelle 2). Diese Probe wird mit Stufe 1 bezeichnet. Während der letzten 40 Minuten der Emulsionspolymerisation wird kein Regler parallel dosiert. Nach der vollständigen Zugabe der Emulsion wird eine Nachreaktionszeit von 30 Minuten bei einer Wasserbadtemperatur von 80°C eingehalten. Das Produkt, im folgenden mit Stufe 2 bezeichnet, wird bei Raumtemperatur abgekühlt und über eine Gaze 125 um filtriert. Die Ergebnisse der Charakterisierung sind in Tabelle 2 zusammengefaßt.

Tabelle 1:

| Zeitlicher Verlauf der Dosierraten | | |
|---|---|---|
| t [min] | Emulsionsdosierung [g/min] | Reglerdosierung [g/min] |
| 2 - | 23,3 | 0,03 |
| 17 - | 47,3 | 0,07 |

Tabelle 1: (fortgesetzt)

| Zeitlicher Verlauf der Dosierraten | | |
|---|---|---|
| t [min] | Emulsionsdosierung [g/min] | Reglerdosierung [g/min] |
| 46 - | 47,3 | 0 |
| 86 - | 0 | 0 |

Beispiel 2:

Die Synthese des Kern-Schale-Polymerisats erfolgte analog Beispiel 1. Es wurden 5 g Regler (n-Dodecylmercaptan; 0,2 % bezogen auf das Monomer) verwendet. Die Dosierraten wurden entsprechend verdoppelt. Die Ergebnisse der Charakterisierung von Stufe 1 und 2 sind ebenfalls in Tabelle 2 zusammengefaßt.

Beispiel 3:

Die Synthese des Kern-Schale-Polymerisats erfolgte analog Beispiel 1. Die Saatlatexmenge wurde auf 21,0 g verringert. Es wurden 1,25 g Regler (n-Dodecylmercaptan; 0,05 % bezogen auf das Monomer) verwendet. Die Dosierraten wurden entsprechend halbiert. Die Ergebnisse der Charakterisierung von Stufe 1 und 2 sind ebenfalls in Tabelle 2 zusammengefaßt.

Die Dispersion wurde mit einer Polymethylmethacrylat-Dispersion (Teilchengröße 126 nm; Feststoffgehalt 49,6 %; $\overline{M_W}$ = 6.800.000 g/mol) in einem Verhältnis von 73:27 gemischt, um eine Dispersion mit bimodaler Teilchengrößenvertreilung zu erhalten.

Beispiel 4:

Die Synthese des Kern-Schale-Polymerisats erfolgte analog Beispiel 1. Die Saatlatexmenge wurde auf 21,0 g verringert. Es wurden 2,5 g Regler (n-Dodecylmercaptan; 0,1 % bezogen auf das Monomer) verwendet. Die Dosierraten wurden beibehalten. Die Ergebnisse der Charakterisierung von Stufe 1 und 2 sind ebenfalls in Tabelle 2 zusammengefaßt.

Die Dispersion wurde mit einer Polymethylmethacrylat-Dispersion (Teilchengröße 126 nm; Feststoffgehalt 49,6 %; $\overline{M_W}$ = 6.800.000 g/mol) in einem Verhältnis von 73:27 gemischt, um eine Dispersion mit bimodaler Teilchengrößenvertreilung zu erhalten.

Vergleichsbeispiel 1:

Die Synthese erfolgte analog Beispiel 1. Allerdings wurde der Regler über die Gesamtzeit der Emulsionsdosierung im gleichem Verhältnis zudosiert. Die Ergebnisse der Charakterisierung des Produktes, im folgenden als Stufe 1 bezeichnet, sind in Tabelle 2 zusammengefaßt,

Vergleichsbeispiel 2:

Die Synthese erfolgte analog Beispiel 2. Allerdings wurde der Regler über die Gesamtzeit der Emulsionsdosierung im gleichem Verhältnis zudosiert. Die Ergebnisse der Charakterisierung des Produktes, im folgenden als Stufe 1 bezeichnet, sind in Tabelle 2 zusammengefaßt.

Vergleichsbeispiel 3:

Die Synthese erfolgte analog Beispiel 3. Allerdings wurde der Regler über die Gesamtzeit der Emulsionsdosierung im gleichem Verhältnis zudosiert. Die Ergebnisse der Charakterisierung des Produktes, im folgenden als Stufe 1 bezeichnet, sind in Tabelle 2 zusammengefaßt.

Die Dispersion wurde analog zu Beispiel 3 mit einer Polymethylmethacrylat-Dispersion (Teilchengröße 126 nm; Feststoffgehalt 49,6 %; $\overline{M_W}$ = 6.800.000 g/mol) in einem Verhältnis von 73:27 gemischt, um eine Dispersion mit bimodaler Teilchengrößenvertreilung zu erhalten.

Vergleichsbeispiel 4:

Die Synthese erfolgte analog Beispiel 4. Allerdings wurde der Regler über die Gesamtzeit der Emulsionsdosierung im gleichem Verhältnis zudosiert. Die Ergebnisse der Charakterisierung des Produktes, im folgenden als Stufe 1 bezeichnet, sind in Tabelle 2 zusammengefaßt.

Die Dispersion wurde analog zu Beispiel 4 mit einer Polymethylmethacrylat-Dispersion (Teilchengröße 126 nm; Feststoffgehalt 49,6 %; $\overline{M_W}$ = 6.800.000 g/mol) in einem Verhältnis von 73:27 gemischt, um eine Dispersion mit bimodaler Teilchengrößenvertreilung zu erhalten.

Tabelle 2:

| Molekulargewichte, Teilchengröße, Feststoffgehalt der Emulsionspolymerisate | | | | | | | |
|---|---|---|---|---|---|---|---|
| | Stufe 1 | | Stufe 2 | | | Produkt | |
| | $\overline{M_W}$ [kg/mol] | $M_p$ [kg/mol] | $\overline{M_W}$ [kg/mol] | *Mp1* [kg/mol] | *Mp2* [kg/mol] | Teilchengröße [nm] | Feststoffgehalt [%] |
| B 1 | 181 | 170 | 1.100 | 190 | 1.900 | 495 | 49,8 |
| B 2 | 105 | 101 | 1.100 | 95 | 2.400 | 498 | 48,9 |
| B 3 | 366 | 345 | 1.100 | 400 | 2.200 | 818 | 48,5 |
| B 4 | 150 | 148 | 740 | 170 | 1.900 | 813 | 46,8 |
| VB 1 | 1.200 | 1140 | | | | 493 | 48,3 |
| VB 2 | 1.550 | 1483 | | | | 498 | 49,3 |
| VB 3 | 1.440 | 1372 | | | | 824 | 47,6 |
| VB 4 | 960 | 952 | | | | 832 | 48,1 |
| B: Beispiel; VB: Vergleichsbeispiel | | | | | | | |
| *Mp; Mp1; Mp2:* Molekulargewicht des Peakmaximums (*Mp* ≈ *Mp1*) | | | | | | | |

Herstellung der Plastisole:

Die Herstellung der Plastisole erfolgt mit einem Dissolver nach einer dem Fachmann bekannten Methode (DIN 11468). Dabei wurden folgende Komponenten verwendet:

| | |
|---|---|
| 114 g | Bindemittel (Beispiel 1 - 4; Vergleichsbeispiel 1 - 4) |
| 206 g | Santicizer 261 (Benzyloctylphthalat; Solutia Inc.) |
| 80 g | Calcit GS0 (synth. Calciumcarbonat; Kalkwerke Johann Schäfer) |
| 8 g | Genitron LE (Azodicarbonsäurediamid mit Zn-Kicker; Bayer AG) |

Untersucht wurde die Viskosität bzw. Lagerstabilität der Plastisole. Die Daten sind in Tabelle 3 dargestellt.

Tabelle 3:

| Viskosität/Lagerstabilität der Plastisole | | | | |
|---|---|---|---|---|
| | Viskosität [mPa] | | | |
| | direkt | 1 Tag | 3 Tage | 7 Tage |
| B 1 | 5.790 | 6.300 | 6.280 | 6.800 |
| B 2 | 5.400 | 6.780 | 6.900 | 10.040 |
| B 3 | 4.798 | 5.001 | 6.200 | 7.161 |
| B 4 | 4.929 | 5.526 | 5.893 | 6.445 |
| VB 1 | 5.890 | 7.890 | 8.400 | 10.056 |
| VB 2 | 6.230 | 7.923 | 8.890 | 11.090 |

Tabelle 3: (fortgesetzt)

| Viskosität/Lagerstabilität der Plastisole | | | | |
|---|---|---|---|---|
| | Viskosität [mPa] | | | |
| | direkt | 1 Tag | 3 Tage | 7 Tage |
| VB 3 | 4.201 | 4.082 | 3.920 | 3.390 |
| VB 4 | 4.523 | 4.780 | 5.230 | 4.983 |
| B: Beispiel; VB: Vergleichsbeispiel | | | | |

Herstellung und Beurteilung der Schäume

Das Plastisol wurde in einer Schichtdicke von 2 mm auf ein Trennpapier aufgetragen. Anschließend wurde es 10 Minuten bei einer Temperatur von 180°C geliert. Beurteilt wurde die Schaumhöhe, die Klebrigkeit, die Porosität und das Rückstellvermögen der Schäume. Die Daten sind in Tabelle 4 dargestellt.

Tabelle 4:

| Schaumhöhe, Klebrigkeit, Porosität und Rückstellvermögen der Plastisolschäume | | | | |
|---|---|---|---|---|
| | Schaumhöhe [mm] | Klebrigkeit | Porosität | Rückstellung |
| B 1 | 5,1 | schwach | feinporig | sehr gut |
| B 2 | 3,0 | schwach | feinporig | sehr gut |
| B 3 | 3,0 | keine | feinporig | sehr gut |
| B 4 | 4,5 | keine | feinporig | sehr gut |
| VB 1 | 2,5 | keine | grobporig | schlecht |
| VB 2 | 4,3 | keine | grobporig | schlecht |
| VB 3 | 2,9 | schwach | feinporig | mittel |
| VB 4 | 3,4 | schwach | feinporig | mittel |
| B: Beispiel; VB: Vergleichsbeispiel<br>Klebrigkeit: Papier-Test (80 $g/m^2$; Din A4)<br>< 1 s ⇒ keine; 1 - 60 s ⇒ schwach; > 60 s ⇒ klebrig<br>Porosität: mittlerer Porendurchmesser<br>≤ 1 mm ⇒ feinporig; > 1 mm ⇒ grobporig<br>Rückstellvermögen: vollständige Relaxation nach Daumentest<br>< 5 s ⇒ sehr gut; 5 - 60 s ⇒ mittel; > 60 s ⇒ schlecht | | | | |

**Patentansprüche**

**1.** Schäumbares Plastisol für einen Schaum mit verbessertem Rückstellvermögen, enthaltend

I. 12,5 bis 99,2 Gew.-% bezogen auf das Gesamtgewicht des schäumbaren Plastisols eines oder mehrerer Polymerisate und/oder Copolymerisate von (Meth)acrylaten erhältlich durch Polymerisation von Zusammensetzungen enthaltend als polymerisierbare Bestandteile

A) 20 bis 100 Gew.-% Methylmethacrylat,

B) 0 bis 80 Gew.-% eines von Methylmethacrylat verschiedenen (Meth)acrylats der Formel I,

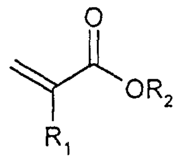

( I )

worin

$R_1$ für Wasserstoff oder Methyl und
$R_2$ für einen linearen oder verzweigten , aliphatischen oder aromatischen Rest mit 1 bis 18 Kohlenstoffatomen steht,

C) 0 bis 40 Gew.-% eines weiteren von A) und B) verschiedenen vinylisch ungesättigten Monomeren und

D) 0 bis 40 Gew.-% eines haftungsvermittelnden Monomeren, wobei A) bis D) 100 Gew.-% der polymerisierbaren Bestandteile ergeben,

II. 0,5 bis 80 Gew.-% mit den Polymerisaten und/oder Copolymerisaten aus I. verträgliche Weichmacher bezogen auf das Gesamtgewicht des schäumbaren Plastisols;
III. 0 bis 87,5 Gew.-% anorganische Füllstoffe bezogen auf das Gesamtgewicht des schäumbaren Plastisols;
IV. 0,1 bis 10 Gew.-% eines oder mehrerer Treibmittel bezogen auf das Gesamtgewicht des schäumbaren Plastisols;
V. 0 bis 5 Gew.-% eines oder mehrerer Kicker bezogen auf das Gesamtgewicht des schäumbaren Plastisols und
VI. 0,1 bis 3 Gew.-% eines oder mehrerer Zusatzstoffe in Mengen bezogen auf das Gesamtgewicht des schäumbaren Plastisols,

wobei I. bis VI. 100 Gew.-% des schäumbaren Plastisols ergeben,
**dadurch gekennzeichnet,**
**daß** wenigstens ein Teil der Polymerisate und/oder Copolymerisate aus I. eine Kern-Schale-Struktur bestehend aus einem Kern und mindestens einer Schale aufweist, wobei

(i) der Kern Polymerketten mit einem Gewichtsmittel des Molekulargewichts $\overline{M_W}$ zwischen 10.000 g/mol und 1.000.000 g/mol aufweist, und
(ii) eine Schale aus Polymerketten mit einem Gewichtsmittel des Molekulargewichts $\overline{M_W}$ größer 1.000.000 g/mol besteht.

**2.** Schäumbares Plastisol gemäß Anspruch 1, **dadurch gekennzeichnet, daß** der Kern des Kern-Schale-Polymerisates und/oder Copolymerisates zwischen 25 und 75 Gew.-% des gesamten Kern-Schale-Polymerisats und/oder Copolymerisates ausmacht.

**3.** Schäumbares Plastisol gemäß Anspruch 1 oder 2, **dadurch gekennzeichnet, daß** eine Schale des Kern-Schale-Polymerisates und/oder Copolymerisates zwischen 25 und 75 Gew.-% des gesamten Kem-Schale-Polymerisats und/oder Copolymerisates ausmacht.

**4.** Schäumbares Plastisol gemäß einem oder mehreren der vorangehenden Ansprüche, **dadurch gekennzeichnet, daß** die Polymerisate und/oder Copolymerisate I neben

(a) 99,9 bis 0,1 Gew.-% bezogen auf das Gesamtgewicht der Polymerisate und/oder Copolymerisate aus I. Polymere und/oder Copolymere mit einer Kern-Schale-Struktur bestehend aus einem Kern und mindestens einer Schale,

(b) 0,1 bis 99,9 Gew.-% bezogen auf das Gesamtgewicht der Polymerisate und/oder Copolymerisate aus I. durch ein einstufiges Polymerisationsverfahren erhältliche Polymere und/oder Copolymere mit einem Gewichtsmittel des Molekulargewichts $\overline{M_W}$ größer 1.000.000 g/mol aufweisen,

wobei (a) und (b) 100 Gew.-% der Polymerisate und/oder Copolymerisate aus I. ergeben.

5. Schäumbares Plastisol gemäß einem oder mehreren der vorangehenden Ansprüche, **dadurch gekennzeichnet, daß** der mittlere Teilchendurchmesser der Kern-Schale-Polymerisate und/oder Copolymerisate im Bereich zwischen 300 und 1500 nm ist.

6. Schäumbares Plastisol gemäß einem oder mehreren der vorangehenden Ansprüche, **dadurch gekennzeichnet, daß** der Rest $R^2$ des (Meth)acrylats der Formel I einen linearen oder verzweigten, aliphatischen oder aromatischen ($C_1$-$C_8$)-Rest umfaßt.

7. Schäumbares Plastisol gemäß einem oder mehreren der vorangehenden Ansprüche, **dadurch gekennzeichnet, daß** der Rest $R^1$ des (Meth)acrylats der Formel I Methyl ist.

8. Schäumbares Plastisol gemäß einem oder mehreren der vorangehenden Ansprüche, **dadurch gekennzeichnet, daß** das Polymerisat und/oder Copolymerisat eine physikalische Mischung zweier Emulsionspolymerisate ist.

9. Schäumbares Plastisol gemäß einem oder mehreren der vorangehenden Ansprüche, **dadurch gekennzeichnet, daß** der Weichmacher II ein Diester der Phthalsäure ist, wobei die Estergruppen sich von linearen oder verzweigten Alkoholen mit 4 bis 24 Kohlenstoffatomen ableiten.

10. Schäumbares Plastisol gemäß einem oder mehreren der vorangehenden Ansprüche, **dadurch gekennzeichnet, daß** der Weichmacher II Dibutylphthalat, Diisobutylphthalat, Dihexylphthalat, Diheptylphthalat, Diisoheptylphthalat, L79phthalat, L711phthalat, Dioctylphthalat, Diisooctylphthalat, Dinonylphthalat, Diisononylphthalat, Didecylphthalat, Diisodecylphthalat, L911phthalat, Diundecylphthalat, Diisoundecylphthalat, Undecyldodecylphthalat, Didodecylphthalat, Diisotridecylphthalat, Butylbenzylphthalat und/oder Diethylhexylphthalat ist.

11. Schäumbares Plastisol gemäß einem oder mehreren der vorangehenden Ansprüche, **dadurch gekennzeichnet, daß** die Polymerisate und/oder Copolymerisate der (Meth)acrylate I eine bi- oder multimodale Verteilung der Teilchengröße aufweisen.

12. Verfahren zur Herstellung von schäumbarem Plastisol gemäß den vorhergehenden Ansprüchen, bei welchem man die Komponenten I, II, III, IV, V und VI sowie gegebenenfalls weitere an sich bekannte Zusätze, geeignet miteinander mischt.

13. Verwendung des schäumbaren Plastisols gemäß den Ansprüchen 1 bis 11 zur Herstellung geformter Gegenstände, insbesondere von Folien, Beschichtungen und Fußbodenbelägen.

14. Geformte Gegenstände erhältlich durch Gelieren und gegebenenfalls Schäumen des schäumbaren Plastisols gemäß den Ansprüchen 1 bis 11.